(19) Europäisches Patentamt / European Patent Office / Office européen des brevets

(11) **EP 2 546 708 A1**

(12) **EUROPEAN PATENT APPLICATION**

(43) Date of publication:
**16.01.2013 Bulletin 2013/03**

(51) Int Cl.:
**G04F 10/04** (2006.01)   **G01S 17/10** (2006.01)
**G04F 10/00** (2006.01)

(21) Application number: **11182877.8**

(22) Date of filing: **27.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **15.07.2011  TW 100125209**

(71) Applicants:
 • **Askey Technology (Jiangsu) Ltd.**
  **Economic-Technological Development Area**
  **Wujiang Jiangsu (CN)**

 • **Askey Computer Corp.**
  **New Taipei City 235 (TW)**

(72) Inventors:
 • **Chou, Ming-Hung**
  **110 Taipei City (TW)**
 • **Hsieh, Ching-Feng**
  **108 Taipei City (TW)**

(74) Representative: **Ciceri, Fabio et al**
  **Perani & Partners**
  **Piazza San Babila, 5**
  **20122 Milano (IT)**

(54) **Method and system for measuring distance**

(57)   A method for measuring distance involves calculating a distance based on light speed and a time taken by an optical signal to travel to an obj ect and return therefrom. The method includes calculating a time based on a cycle number of a reference signal under a clock mask synchronized with emission and reception of the optical signal; correcting the time according to a plurality of phase shift signals generated based on the reference signal; and minimizing an error of the time by increasing the quantity of the phase shift signals. The method enhances the accuracy of the measured time taken by an optical signal to travel to an object and return therefrom, speeds up measurement, and reduces the required circuit areas. A system for measuring distance is further introduced for use with the method.

FIG. 1

EP 2 546 708 A1

## Description

### FIELD OF THE INVENTION

The present invention relates to methods and systems for measuring distance, and more particularly, to a precise method and system for measuring distance.

### BACKGROUND OF THE INVENTION

A method and system for measuring distance of an object usually entails performing two tasks, that is, receiving and emitting an optical signal, and performing time measurement, and then involve performing distance computation according to the light speed and an obtained time, so as to obtain the distance between the optical signal and the object. Time measurement requires measuring the time taken by the optical signal to travel to the object and return from the object and estimating the distance of the object according to the time and the light speed. Time measurement usually involves calculating, by conversion, the time taken by the optical signal to alternate between reception and emission according to a fundamental frequency signal (or a known time as defined).

To be specific, time measurement involves calculating the time taken by the optical signal to alternate between reception and emission according to the number of cycles of a fundamental frequency signal and a preset frequency of the fundamental frequency signal, and thus the precision of the calculated number of cycles of the fundamental frequency signal affects the accuracy of the calculated time.

Normally, calculation of the number of cycles of the fundamental frequency signal requires counting, that is, counting the number of cycles of the fundamental frequency signal during a gate time period that starts from a point in time of reception of an optical signal and ends at a point in time of emission of the optical signal. Nonetheless, the number of cycles of the fundamental frequency signal during the gate time period is seldom an integer, and thus the method is likely to cause an error at the beginning and the end of the gate time period — underestimating or overestimating by a half cycle, for example.

### SUMMARY OF THE INVENTION

It is an objective of the present invention to enhance the computation speed and accuracy of distance measurement.

Another objective of the present invention is to reduce circuit-occupied area and reduce power consumption.

In order to achieve the above and other objectives, the present invention provides a method for measuring distance, by performing computation of a distance of an object based on a light speed of an optical signal and a time taken by the optical signal to travel to the object and return from the object and obtained by means of time measurement, characterized in that the time measurement comprises the steps of: providing a reference signal; generating a plurality of phase shift signals of a same frequency based on the reference signal, the phase shift signals being spaced apart from each other by a fixed phase; setting a clock mask, the clock mask starting from an emitting signal when emitting the optical signal and ending at a receiving signal when receiving the optical signal reflected; counting a number $Nd1$ of second triggering states occurring to the phase shift signals during a time period from a point in time of commencement of the clock mask to occurrence of a first triggering state to the reference signal; counting a number $Nb$ of cycles of the reference signal during the time period of the clock mask based on the first triggering state; counting a number $Nd2$ of the second triggering states occurring to the phase shift signals during a time period from a point in time of termination of the clock mask to occurrence of the first triggering state to the reference signal; and obtaining a time $t$ taken by the optical signal to travel to the object and return from the object with the equation below: $t = (Nb/Fb) + [Nd1/(Fb/M)] - [Nd2/(Fb/M)]$, wherein frequency of the reference signal is denoted by $Fb$ and number of the phase shift signals by $M$, and $M \geqq 2$.

In order to achieve the above and other objectives, the present invention provides a system for measuring distance, comprising: an optical signal generating unit for emitting an optical signal, receiving the optical signal reflected from an object, and generating an emitting signal and a receiving signal based on emission and reception of the optical signal, respectively; a signal input end for receiving the emitting signal and the receiving signal; a distance measurement apparatus connected to the signal input end for receiving the emitting signal and the receiving signal, generating a reference signal of a frequency $Fb$, generating $M$ phase shift signals based on the reference signal, characterized by a same frequency, and spaced apart from each other by a fixed phase, generating a clock mask starting from the emitting signal and ending at the receiving signal, counting a number $Nd1$ of second triggering states occurring to the phase shift signals during a time period from a point in time of commencement of the clock mask to occurrence of a first triggering state to the reference signal, counting a number $Nb$ of cycles of the reference signal during the time period of the clock mask based on the first triggering state, counting a number $Nd2$ of second triggering states occurring to the phase shift signals during a time period from a point in time of termination of the clock mask to occurrence of a first triggering state to the reference signal, and outputting values Fb, M, Nb, Nd1, and Nd2; and a computing device connected to the distance measurement apparatus for receiving the values, performing computation with the equation below to obtain a time t taken by the optical signal to travel to the object and return from the object, and performing computation of distance of the object based on the time t and a light speed c, $t = (Nb/Fb) + [Nd1/(Fb/M)] - [Nd2/(Fb/M)]$ where $M \geqq 2$.

In an embodiment, the distance measurement apparatus comprises: a fundamental frequency generating unit for generating a fundamental frequency signal; a frequency multiplying unit connected to the fundamental frequency generating unit for turning the fundamental frequency signal into the reference signal by frequency multiplication; and a programmable gate array connected to the signal input end for receiving the emitting signal and the receiving signal, connected to the frequency multiplying unit for receiving the reference signal, and adapted to generate the values M, Nb, Nd1, and Nd2 and output the values Fb, M, Nb, Nd1, and Nd2.

In an embodiment, the computing device is one of a control unit and a computer device.

In an embodiment, the first triggering state is one of a rising edge triggering state and a falling edge triggering state, and the second triggering state is one of a rising edge triggering state and a falling edge triggering state.

In an embodiment, four or eight said phase shift signals are generated.

In an embodiment, the computing device replaces the value Fb with a default value.

Accordingly, a method and system for measuring distance of the present invention eliminate time measurement errors by quick and precise multiphase processing and multiply the accuracy of measurement in accordance with the quantity of generated phase shift signals, so as to reduce the area occupied by a circuit and reduce power consumption.

## BRIEF DESCRIPTION OF THE DRAWINGS

Objectives, features, and advantages of the present invention are hereunder illustrated with specific embodiments in conjunction with the accompanying drawings, in which:

FIG 1 is a timing diagram of a method for measuring distance according to an embodiment of the present invention;
FIG 2 is a flow chart of the method for measuring distance according to an embodiment of the present invention; and
FIG 3 is a function block diagram of a system for measuring distance according to an embodiment of the present invention.

## DETAILED DESCRIPTION OF THE PREFERRED EMBODIMENTS

The steps of a method for measuring distance of the present invention are described in specific embodiments thereof and are, unless otherwise specified, interchangeable in terms of sequence. Furthermore, the concept of "connection" used in the description of specific embodiments of a system for measuring distance according to the present invention is not limited to direct connection; instead, connection can also be effectuated by an intervening element. Also, a "first triggering state" and a "second triggering state" used in the description of the method and system for measuring distance of the present invention comprise one of a rising edge triggering state and a falling edge triggering state. The first triggering state and the second triggering state are not mutually exclusive; hence, both the first triggering state and the second triggering state may be rising edge triggering states or falling edge triggering states.

In the embodiments of the present invention, a measured time is obtained by making reference to the course of a journey undertaken by an optical signal to and fro between an object and a measurement system, by multiphase processing, and by predetermined equations, and eventually the measured distance between the optical signal and the object is obtained based on the light speed of the optical signal and the measured time.

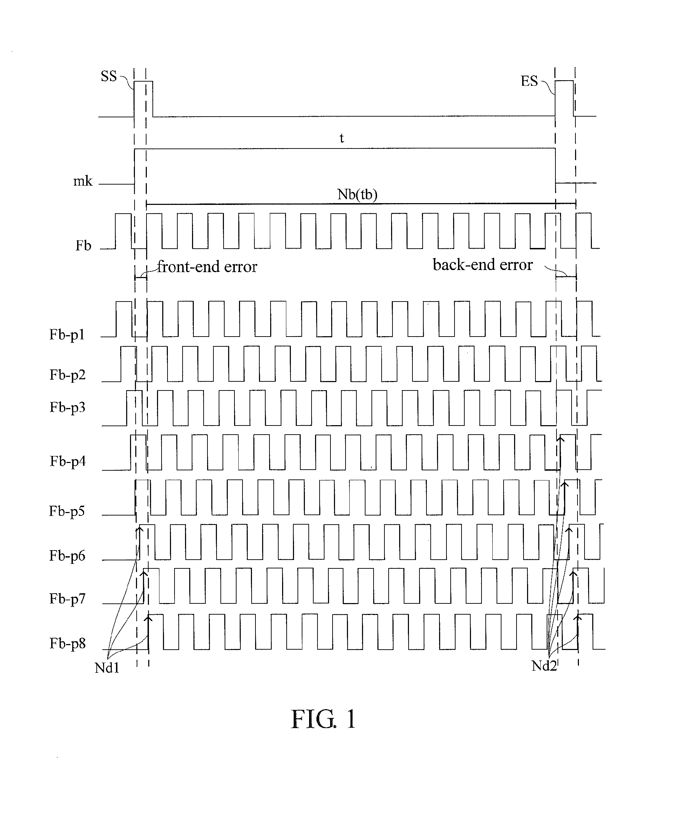

Referring to FIG 1, there is shown a timing diagram of a method for measuring distance according to an embodiment of the present invention. As shown in FIG. 1, this embodiment is exemplified by eight phase shift signals. Persons skilled in the art should be able to understand that, given at least two phase shift signals, the method and system for measuring distance of the present invention is effective in eliminating errors of time measurement and thereby enhancing the accuracy of the time measured.

A method for measuring distance according to an embodiment of the present invention comprises the steps of:

As shown in FIG 1, in the course of the distance measurement of an object, an optical signal generating unit generates an emitting signal SS and a receiving signal ES when emitting an optical signal and receiving the optical signal from the object, respectively. In an embodiment of the present invention, time measurement starts with the step of providing a reference signal Fb and the step of generating multilevel phase shift signals Fb-p1~Fb-p8 of the same frequency based on the reference signal, wherein the phase shift signals Fb-p1~Fb-p8 are spaced apart from each other by a fixed phase.

The reference signal Fb functions as a fundamental frequency. The phase shift signals are generated from the reference signal Fb. Normally, the phase shift of a signal is effectuated by a digital clock manager (DCM) of a programmable gate array (FPGA). In this embodiment, eight phase shift signals Fb-p1~Fb-p8 are processed by two digital clock managers, and the reference signal Fb is decomposed by a digital clock manager to form four phase shift signals. However, persons skilled in the art should be able to understand that a user can still selectively shut down four of the phase shift decomposition processes even with just one digital clock manager. Hence, with only one digital clock manager, it is still possible to decompose the reference signal Fb into two or three phase shift signals. Hence, users can select the quantity of required phase shift signals as needed and as appropriate for operation of a digital clock manager. Regarding the spacing of phase shift signals, a digital clock manager divides 360° into equal phase portions and distributes the equal phase portions among the phase shift signals. For example, the phase equals 360°/(M - 1), where M denotes the number of phase shift signals.

Afterward, a clock mask mk is set. The clock mask mk thus set starts from the emitting signal SS when emitting the optical signal and ends at the receiving signal ES when receiving the optical signal. Hence, the clock mask mk can be triggered synchronously with the signal SS and the signal ES, such that the time period of time measurement equals the time taken by the optical signal to undertake a journey to and fro between the object and a measurement system. Regarding the rising edge triggering signal SS and signal ES shown in FIG 1, persons skilled in the art understand that the signal SS and the signal ES can be replaced by the falling edge triggering states for denoting the point in time of sending the optical signal and the point in time of receiving the optical signal, respectively.

Upon initialization of the clock mask mk, time measurement kicks off. Referring to FIG 1, the reference signal Fb does not synchronize with the clock mask mk; hence, the time actually taken to effect the number Nb of cycles of the reference signal Fb measured does not fall within the range of the clock mask mk, thereby resulting in front-end errors and back-end errors.

Hence, in an embodiment of the present invention, the front-end and back-end errors which occur in the course of time measurement are eliminated by means of the phase shift signals.

Regarding the front-end errors, the number Nd1 of second triggering states (rising-edge or falling-edge triggering states) that occur to the phase shift signals Fb-p1~Fb-p8 during the time period from the point in time of commencement of the clock mask mk to the point in time when a first triggering state occurs to the reference signal Fb is counted.

Regarding the back-end errors, the number Nd2 of second triggering states (rising-edge or falling-edge triggering states) that occur to the phase shift signals Fb-p1~Fb-p8 during the time period from the point in time of termination of the clock mask mk to the point in time when a first triggering state occurs to the reference signal Fb is counted.

Counting the second triggering states that occur to the phase shift signals Fb-p1~Fb-p8 means that a back-end error time period requires selecting the rising edge triggering state as the second triggering state when a front-end error time period requires selecting the rising edge triggering state as the second triggering state, or means that a back-end error time period requires selecting the falling edge triggering state as the second triggering state when a front-end error time period requires selecting the falling edge triggering state as the second triggering state. As shown in FIG 1, the rising edge triggering state is selected to be the second triggering state, thereby setting Nd1 to 3 and Nd2 to 5.

As shown in FIG 1, the time actually taken by the optical signal to travel to and fro between the object and the measurement system is denoted by t as expressed by equation (1):

$$t = tb + td1 - td2 \tag{1}$$

Hence, in a subsequent calculation process, the number Nd1 and the number Nd2 are used in calculating front-end error time td1 and back-end error time td2 to therefore eliminate front-end and back-end errors.

Nb denotes the number of cycles of the reference signal Fb measured based on the first triggering state within the time period of the clock mask mk. Fb also denotes the frequency of the reference signal Fb. M denotes the number of the phase shift signals. The feature "being based on the first triggering state" means that the counting of the number of cycles of the reference signal Fb is in line with the point in time of termination of the front-end error time period td1. Hence, as shown in FIG 1, the point in time of commencement of the counting of the number of cycles of the reference signal Fb starts from the rising edge triggering state rather than the falling edge triggering state. Conversely, if the time period td1 is changed to a time period starting from the point in time of commencement of the clock mask mk and ending at the point in time of occurrence of a falling edge triggering state (first triggering state) to the reference signal Fb, the front-end error time period td1 will end at the falling edge triggering state, and the point in time of commencement of the counting of the number of cycles of the reference signal Fb will start from the falling edge triggering state. Hence, as indicated by the relationship between time, frequency, and number of cycles, clock mask time tb can be calculated by equation (2),

$$tb = (Nb/Fb) \tag{2}$$

the front-end error time td1 is calculated by equation (3),

$$td1 = [Nd1/(Fb/M)] \tag{3}$$

the back-end error time td2 is calculated by equation (4),

$$td2 = [Nd2/(Fb/M)] \tag{4}$$

Accordingly, the measured time t is calculated by equation (5),

$$t = (Nb/Fb) + [Nd1/(Fb/M)] - [Nd2/(Fb/M)] \tag{5}$$

wherein M denotes the number of the phase shift signals, with M≧2, indicating that at least two said phase shift signals are generated.

Furthermore, as indicated by equation (5), the more the phase shift signals are, the more the multiplication of enhancement of accuracy of measurement is. Hence, when compared with a conventional method which is not based on calibration of front-end errors and back-end errors, the method shown in FIG 1 and disclosed in an embodiment of the present invention increases accuracy eightfold. The more the phase shift signals are, the shorter the time period is, thereby eliminating increasingly small errors.

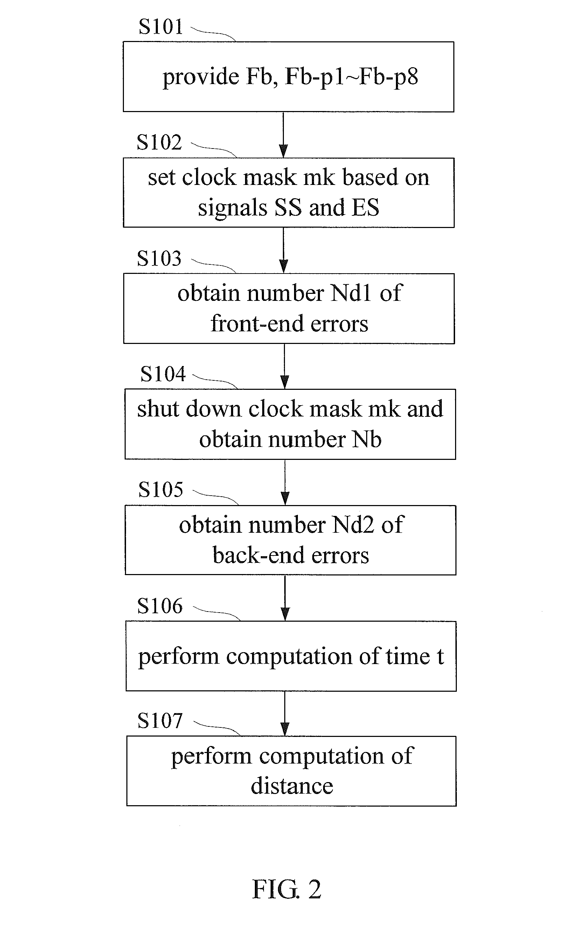

Referring to FIG 2, there is shown a flow chart of the method for measuring distance according to an embodiment of the present invention. Referring to FIG 1, time measurement depends on distance measurement, except for provision of the reference signal Fb and the phase shift signals Fb-p1~Fb-p8 thereof in advance (or in synchrony with the clock mask). The method for measuring time comprises the steps of: (S101) providing a reference signal Fb and a plurality of phase shift signals Fb-p1~Fb-p8; (S102) setting a clock mask mk based on signals SS and ES; (S103) counting the number Nd1 of front-end errors; (S104) shutting down the clock mask mk and obtaining the cycle number Nb; (S105) counting the number Nd2 of back-end errors; (S106) performing computation by equation (5); and (S107) performing computation of distance of the object based on the time t and a light speed c, that is, (c×t).

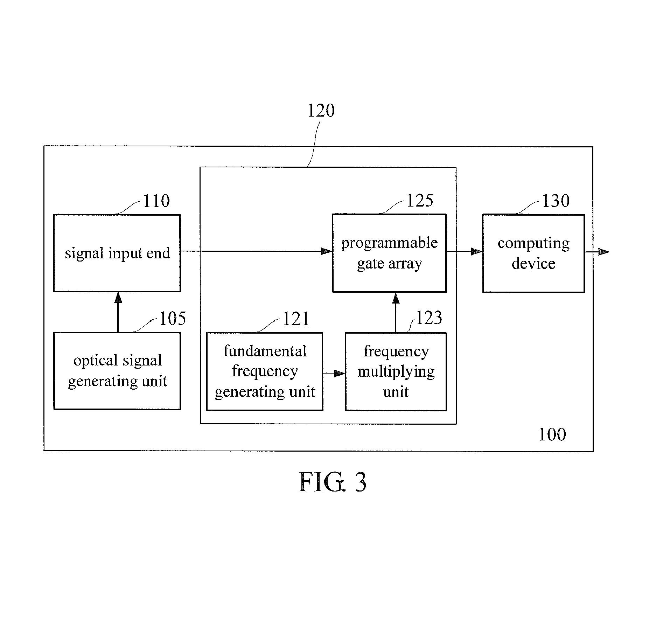

Referring to FIG 3, there is shown a function block diagram of a system for measuring distance according to an embodiment of the present invention. As shown in FIG 3, the distance measuring system 100 comprises an optical signal generating unit 105, a signal input end 110, a distance measurement apparatus 120, and a computing device 130.

The optical signal generating unit 105 emits an optical signal, receives the optical signal reflected from an object, and generates an emitting signal SS and a receiving signal ES based on the emission and reception of the optical signal, respectively.

The signal input end 110 receives the emitting signal SS and the receiving signal ES.

The distance measurement apparatus 120 is connected to the signal input end 110 for receiving the emitting signal SS and the receiving signal ES. The distance measurement apparatus 120 generates the following signals and/or values: the reference signal Fb; M phase shift signals based on the reference signal, characterized by a same frequency, and spaced apart from each other by a fixed phase; a clock mask mk starting from the emitting signal SS and ending at the receiving signal ES; a number Nd1 of second triggering states occurring to the phase shift signals during a front-end error time period; a number Nb of cycles of the first triggering state occurring to the reference signal Fb during the time period of the clock mask mk; a number Nd2 of second triggering states occurring to the phase shift signals during a back-end error time period; and the output values Fb, M, Nb, Nd1, and Nd2.

In an embodiment, the distance measurement apparatus 120 comprises: a fundamental frequency generating unit 121, a frequency multiplying unit 123, and a programmable gate array 125. The fundamental frequency generating unit 121 generates a fundamental frequency signal. Normally, a low fundamental frequency is generated by a crystal oscillator to cut costs, and then the fundamental frequency is boosted by the frequency multiplying unit 123 connected to the fundamental frequency generating unit 121 for functioning as the reference signal Fb.

The programmable gate array 125 comprises a digital clock manager for functioning as a phase shift generating circuit, a differential circuit for performing upper or lower differentiation (rising edge triggering or falling edge triggering) to count Nd1 and Nd2, and a mask circuit for generating the clock mask mk and counting the reference signal Fb. Accordingly, the programmable gate array 125 generates the values M, Nb, Nd1, and Nd2 and outputs the count values Fb, M, Nb, Nd1, and Nd2.

The programmable gate array is a conventional element. The system for measuring distance according to an embodiment of the present invention achieves the objectives of the present invention by means of logical elements of the system for measuring distance. The method for measuring distance according to an embodiment of the present invention reduces the required number of the logical elements, dispenses with a large-sized programmable gate array chip, and thus reduces the circuit-occupied area and downsizes the product. For example, if the computing function of a computing device is also incorporated into the programmable gate array, the required number of the logical elements will be greatly increased, thereby increasing the circuit-occupied area. Due to its structural design, the programmable gate array has to effectuate the computation operation by a logical means at the cost of increasing the requirement of high-speed logical elements. Although a special programmable gate array having a computing structure circuit therein can perform high-speed computation and reduce the space requirement of logical elements, it incurs an excessively high cost.

The computing device 130 is connected to the distance measurement apparatus 120 for receiving the values and performing computation thereon with equation (5) to obtain the measured time t, and perform distance computation with the light speed c so as to calculate the distance between the measuring system and the object. The computing device 130 is a control unit (MCU) or a computer device. If the computing device 130 is a control unit, then the control unit is usually disposed on the same circuit board as the distance measurement apparatus 120 is, such that the distance measuring system 100 in its entirety is integrated onto a module; however, the computing device 130 can also be an external computer device for processing a computation procedure in whole with data provided by a measuring module.

To reduce errors further, it is feasible to perform a high-precision measurement process on the generated reference signal Fb beforehand. To preclude any error which might otherwise be produced because a frequency actually generated by a fundamental frequency generating unit and a frequency multiplier is different from a given frequency level (that is, a frequency level set forth in the specifications of the fundamental frequency generating unit and the frequency multiplier), it is feasible to measure the reference signal Fb in advance by means of a high-precision frequency counter having a higher resolution than the frequency of the reference signal Fb, and then use the measured reference signal Fb as a default value to be directly stored in the computing device 130. In doing so, in every instance of measurement, the default value always applies to the frequency of the reference signal Fb, thereby dispensing with the need to use a parameter set forth in the specifications of the fundamental frequency generating unit and the frequency multiplier.

Accordingly, a method and system for measuring distance of the present invention eliminate time measurement errors by quick and precise multiphase processing and multiply the accuracy of measurement in accordance with the quantity of generated phase shift signals. In the embodiments of the present invention, the errors are reduced eightfold (corresponding to eight phase shift signals) so as to achieve high-precision distance measurement and reduce the area occupied by a circuit.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

**Claims**

1. A method for measuring distance, by performing computation of a distance of an object based on a light speed of an optical signal and a time taken by the optical signal to travel to the object and return from the object and obtained by means of time measurement, **characterized in that** the time measurement comprises the steps of:

   providing a reference signal;
   generating a plurality of phase shift signals of a same frequency based on the reference signal, the phase shift signals being spaced apart from each other by a fixed phase;
   setting a clock mask, the clock mask starting from an emitting signal when emitting the optical signal and ending at a receiving signal when receiving the optical signal reflected;
   counting a number Nd1 of second triggering states occurring to the phase shift signals during a time period from a point in time of commencement of the clock mask to occurrence of a first triggering state to the reference signal;
   counting a number Nb of cycles of the reference signal during the time period of the clock mask based on the first triggering state;
   counting a number Nd2 of the second triggering states occurring to the phase shift signals during a time period from a point in time of termination of the clock mask to occurrence of the first triggering state to the reference signal; and

obtaining a time t taken by the optical signal to travel to the object and return from the object with the equation below:

$$t = (Nb/Fb) + [Nd1/(Fb/M)] - [Nd2/(Fb/M)],$$

wherein frequency of the reference signal is denoted by Fb and number of the phase shift signals by M, and M 2.

2. The method of claim 1, wherein the first triggering state is one of a rising edge triggering state and a falling edge triggering state.

3. The method of claim 1, wherein the second triggering state is one of a rising edge triggering state and a falling edge triggering state.

4. The method of claim 1, wherein four or eight said phase shift signals are generated.

5. The method of claim 1, further comprising replacing frequency Fb of the reference signal with a default value.

6. The method of claim 1, wherein the fixed phase equals 360°/(M - 1).

7. A system for measuring distance, comprising:

an optical signal generating unit for emitting an optical signal, receiving the optical signal reflected from an object, and generating an emitting signal and a receiving signal based on emission and reception of the optical signal, respectively;
a signal input end for receiving the emitting signal and the receiving signal;
a distance measurement apparatus connected to the signal input end for receiving the emitting signal and the receiving signal, generating a reference signal of a frequency Fb, generating M phase shift signals based on the reference signal, **characterized by** a same frequency, and spaced apart from each other by a fixed phase, generating a clock mask starting from the emitting signal and ending at the receiving signal, counting a number Nd1 of second triggering states occurring to the phase shift signals during a time period from a point in time of commencement of the clock mask to occurrence of a first triggering state to the reference signal, counting a number Nb of cycles of the reference signal during the time period of the clock mask based on the first triggering state, counting a number Nd2 of second triggering states occurring to the phase shift signals during a time period from a point in time of termination of the clock mask to occurrence of a first triggering state to the reference signal, and outputting values Fb, M, Nb, Nd1, and Nd2; and
a computing device connected to the distance measurement apparatus for receiving the values, performing computation with the equation below to obtain a time t taken by the optical signal to travel to the object and return from the object, and performing computation of distance of the object based on the time t and a light speed c,

$$t = (Nb/Fb) + [Nd1/(Fb/M)] - [Nd2/(Fb/M)],$$

wherein M 2.

8. The system of claim 7, wherein the distance measurement apparatus comprises:

a fundamental frequency generating unit for generating a fundamental frequency signal;
a frequency multiplying unit connected to the fundamental frequency generating unit for turning the fundamental frequency signal into the reference signal by frequency multiplication; and
a programmable gate array connected to the signal input end for receiving the emitting signal and the receiving signal, connected to the frequency multiplying unit for receiving the reference signal, and adapted to generate the values M, Nb, Nd1, and Nd2 and output the values Fb, M, Nb, Nd1, and Nd2.

9. The system of claim 8, wherein the computing device replaces the value Fb with a default value.

**10.** The system of claim 7, wherein the computing device is one of a control unit and a computer device.

**11.** The system of claim 7, wherein the first triggering state is one of a rising edge triggering state and a falling edge triggering state, and the second triggering state is one of a rising edge triggering state and a falling edge triggering state.

FIG. 1

S101

provide Fb, Fb-p1~Fb-p8

S102

set clock mask mk based on
signals SS and ES

S103

obtain number Nd1 of
front-end errors

S104

shut down clock mask mk and
obtain number Nb

S105

obtain number Nd2 of
back-end errors

S106

perform computation of time t

S107

perform computation of
distance

FIG. 2

FIG. 3

Europäisches
Patentamt

European
Patent Office

Office européen
des brevets

# EUROPEAN SEARCH REPORT

Application Number

EP 11 18 2877

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 548 460 A1 (TDK CORP [JP]) 29 June 2005 (2005-06-29) * paragraphs [0042] - [0049], [0051] - [0060], [0064] - [0070]; figures 3-6,8-11,13,15 * | 1-11 | INV. G04F10/04 G01S17/10 G04F10/00 |
| A | JP 6 138230 A (NEC CORP) 20 May 1994 (1994-05-20) * abstract; figure 2 * | 1-11 | |
| A | US 2003/197498 A1 (WATANABE TAKAMOTO [JP] ET AL) 23 October 2003 (2003-10-23) * paragraphs [0060], [0062] - [0067]; figure 2 * | 1-11 | |
| | | | TECHNICAL FIELDS SEARCHED (IPC) |
| | | | G04F G01S |

The present search report has been drawn up for all claims

| Place of search | Date of completion of the search | Examiner |
|---|---|---|
| The Hague | 14 November 2011 | Bream, Philip |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 11 18 2877

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2011

| Patent document cited in search report | | | Publication date | Patent family member(s) | | | Publication date |
|---|---|---|---|---|---|---|---|
| EP 1548460 | | A1 | 29-06-2005 | EP | 1548460 | A1 | 29-06-2005 |
| | | | | JP | 2005181180 | A | 07-07-2005 |
| | | | | KR | 20050063677 | A | 28-06-2005 |
| | | | | US | 2005134498 | A1 | 23-06-2005 |
| JP 6138230 | | A | 20-05-1994 | NONE | | | |
| US 2003197498 | | A1 | 23-10-2003 | NONE | | | |

EPO FORM P0459

For more details about this annex : see Official Journal of the European Patent Office, No. 12/82